(19)

Europäisches
Patentamt
European
Patent Office
Office européen
des brevets

(11) **EP 3 891 828 B1**

(12) **EUROPEAN PATENT SPECIFICATION**

(45) Date of publication and mention
of the grant of the patent:
**06.07.2022 Bulletin 2022/27**

(21) Application number: **18839950.5**

(22) Date of filing: **05.12.2018**

(51) International Patent Classification (IPC):
**H01M 4/90** *(2006.01)*        **H01M 8/16** *(2006.01)*

(52) Cooperative Patent Classification (CPC):
**H01M 8/16; H01M 4/9083;** Y02E 60/50

(86) International application number:
**PCT/TR2018/050767**

(87) International publication number:
**WO 2020/117136 (11.06.2020 Gazette 2020/24)**

(54) **ELECTRICAL ENERGY PRODUCTION USING STEM CELL LINES, AND A BIOFUEL CELL THEREFOR**

ERZEUGUNG ELEKTRISCHER ENERGIE UNTER VERWENDUNG VON STAMMZELLINIEN SOWIE
DAFÜR VORGESHENE BIO-BRENNSTOFFZELLE

PRODUCTION D'ÉNERGIE ÉLECTRIQUE EN UTILISANT DES LIGNES DE CELLULE SOUCHE ET
UNE CELLULE DE BIOCARBURANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.10.2021 Bulletin 2021/41**

(73) Proprietors:
- **ÜSKÜDAR ÜNIVERSITESI**
  **34662 Istanbul (TR)**
- **Yildiz Teknik Üniversitesi**
  **34220 Istanbul (TR)**
- **Sabanci Üniversitesi**
  **34956 Istanbul (TR)**
- **Sabanci Üniversitesi Nanoteknoloji Arastirma Ve
  Uygulama Merkezi Sunum**
  **34956 Istanbul (TR)**

(72) Inventors:
- **ATASEVER ARSLAN, Belkis**
  **34662 Istanbul (TR)**
- **CATAL, Tunc**
  **34662 Istanbul (TR)**
- **AKDOGAN, Erhan**
  **34220 Istanbul (TR)**
- **CEBECI, Fevzi Cakmak**
  **34956 Istanbul (TR)**

(74) Representative: **Sevinç, Erkan
Istanbul Patent A.S.
Plaza-33, Büyükdere Cad. No: 33/16
Sisli
34381 Istanbul (TR)**

(56) References cited:
**US-A1- 2013 026 969**

- **ZEBDA ABDELKADER ET AL: "Challenges for
  successful implantation of biofuel cells",
  BIOELECTROCHEMISTRY, ELESEVIER,
  AMSTERDAM, NL, vol. 124, 18 June 2018
  (2018-06-18), pages 57-72, XP085477570, ISSN:
  1567-5394, DOI:
  10.1016/J.BIOELECHEM.2018.05.011**
- **DESAI A ET AL: "Human neuroblastoma
  (SH-SY5Y) cell culture and differentiation in 3-D
  collagen hydrogels for cell-based biosensing",
  BIOSENSORS AND BIOELECTRONICS,
  ELSEVIER SCIENCE LTD. UK, AMSTERDAM, NL,
  vol. 21, no. 8, 15 February 2006 (2006-02-15),
  pages 1483-1492, XP024961437, ISSN: 0956-5663,
  DOI: 10.1016/J.BIOS.2005.07.005 [retrieved on
  2006-02-15]**

## Description

### Technical Field of the Invention

The present invention relates to a method for electrical energy conversion using stem cell lines, and a biofuel cell therefor.

### Background

Organisms capable of producing high amounts of electrical power are available in the nature. For instance, electric eel (a.k.a. *Electrophorus electricus*) is known to produce about 600 V and 1 A which correspond to an amount of power up to 600 W, making use of their electrocytes. Such examples motivate researchers to make use of microorganisms in electrical energy production.

Microorganisms are known to grow rapidly. Working principle of biofuel cells (BFCs) which employ microorganisms, are usually suitable for being integrated into wastewater treatment systems, and therefore they are not yet available for being employed in a larger spectrum of technical fields.

Biobatteries, which can be defined as energy generating devices powered by organic compounds, become a highly attractive research subject for scientists aiming to develop new energy resources to be employed in near future. It is an important aspect of the relevant technical field, to provide and combine suitable materials for obtaining sustainable and high capacity biobatteries. Biofuel cells employing microorganisms such as algae and viruses are developed to generate energy over their metabolisms.

US 2013/0026969 A1 discloses an energy generating means which is implantable into human veins, to produce electricity from blood glucose. Said means is only suitable to function inside a human body, instead of being able to be connected to various electronic devices for energizing such devices.

It is desired to propose a sustainable way of electrical energy production for energizing electronic devices.

### Summary

Primary object of the present invention is to overcome the abovementioned shortcomings of the prior art.

Another object of the present invention is provision of a biofuel cell and method for sustainable energy generation with low operational costs.

The sustainability potential of biobatteries employing neural stem cell lines has remained unknown up to the present. Neural stem cell lines can be employed as electrocytes; and SH-SY5Y is considered as an exemplary neural stem cell which is highly suitable for being used in sustainable energy production.

Thus, the present invention relates to a promising energy source for industrial scale electrical energy production. The environmentally friendly device according to the present invention provides electricity with low cost, high portability and high sustainability. The energy production capacity of the device can be adjusted over its scale. The biofuel cell according to the present invention being compatible for scale adjustment, enables a high portability.

Accordingly, a biofuel cell is presented, which comprises an anode provided with neural stem cell lines. Said neural stem cell lines preferably include neuroblastoma cell lines, and more preferably SH-SY5Y cell line. Carbon cloth is found as a suitable example for being used as a cathode material, and also for growing the neural stem cell lines for being used as an anode material. A medium which includes dissolved glucose as carbon source is found to be suitable for growing the neural stem cell lines, and also for being used as electrolyte. A medium including a serum, antibiotics, L-glutamine, glucose and one or more pH buffers is considered within the above definition. The biofuel cell can be connected with an amplifier to further increase voltage values.

### Brief Description of the Drawings

The drawings, whose brief explanation is herewith provided, are solely intended for providing a better understanding of the present invention and are as such not intended to define the scope of protection or the context in which said scope is to be interpreted in the absence of the description.

Fig.1 shows a schematic illustration of an exemplary embodiment of the biofuel cell according to the present invention.

Fig.2 shows an exemplary setup for proving the concept and for observing the activity of the biofuel cell according to the present invention, by voltage amplification for energizing electronic device(s).

Fig.3 shows cyclic voltammetry analysis results of the anode provided with neural stem cell lines and an anode having no neural stem cells as the control at a scan rate of 10 mV/sec.

Fig.4 shows cyclic voltammetry analysis results of the biofuel cell including an anode provided with neural stem cell lines, at scan rates of 0.2 mV/s, 1 mV/s and 5 mV/s.

Fig.5 shows responses in voltage generation profiles achievable using the biofuel cell according to the present invention, upon repeated introductions of media; in comparison with the power generation profile of a "control" fuel cell which has an anode lacking neural stem cell lines (control biofuel cell).

Fig.6 shows voltage generation profiles achievable using the biofuel cell according to the present invention at 980 Ohms, and the effects of increasing glucose concentrations of the medium and introduction of fetal bovine serum into the medium.

Fig.7 shows several power density values achievable using the biofuel cell according to the present invention including a medium based on DMEM.

## Detailed Description of the Invention

Referring now the drawings outlined before, the present invention proposes a biofuel cell (1) comprising an anode (2) provided with neural stem cell lines, preferably neuroblastoma cell lines, and even more preferably SH-SY5Y cell line.

Said neural stem cell lines can be provided on one or more carbon clothes at least partly forming the anode (2). Carbon cloth can be preferred for the merit of their high electrical conductivity. Furthermore, carbon cloth has a high specific surface area facilitating immobilization of neural stem cell lines by mechanical adhesion thereon.

The biofuel cell (1) can comprise a cathode (3) which can at least partly be formed from a gas-permeable and electrically conductive material. In an exemplary embodiment, said material can include a textile which includes one or more ingredient selected from carbon fibers, graphene and conductive inert metals such as gold. In another exemplary embodiment, said material can include carbon cloth. For instance, the cathode (3) can be substantially formed from any one of: a gas-permeable and electrically conductive material, a textile which includes carbon fibers, one or more carbon clothes, etc.

Here, carbon cloth can be considered preferable because of its high electrical conductivity as mentioned above, and further because the carbon cloth is substantially gas permeable, enabling the use of gaseous oxygen sources passing through.

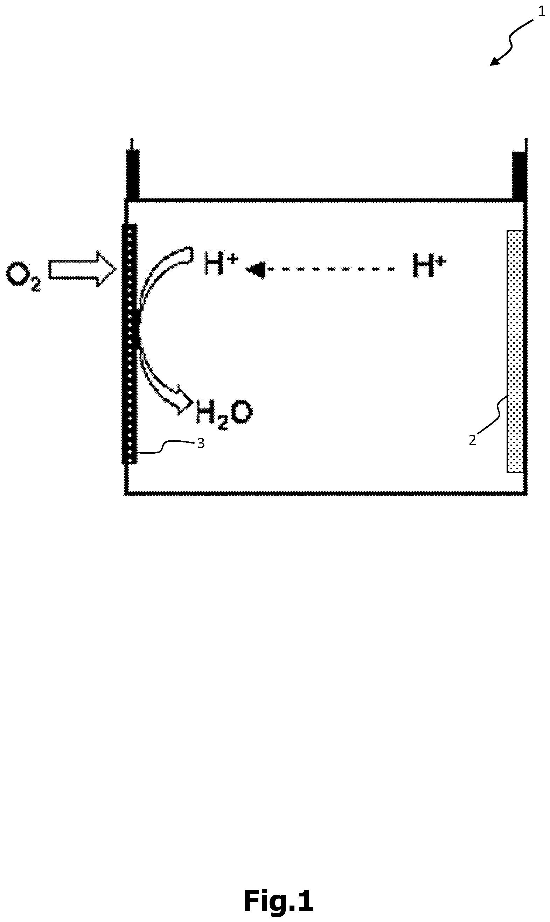

The cathode (3) can include an ambient air contact side for making use of ambient air in cathode reactions. Such exemplary embodiment of the biofuel cell (1) is depicted in the Fig.1, which enables utilizing ambient air without any costs related to any further oxygen supply.

The cathode (3) can be substantially liquid impermeable and can further be adapted to constitute a side wall of said biofuel cell (1), and the cathode (3) can include an oxygen source contact receiving surface (e.g. an ambient air contact side) provided with a water repelling agent. A side wall of the biofuel cell (1) being at least partly formed from the cathode (3) instead of placing the cathode (1) inside the biofuel cell (1), corresponds to decreasing the weight of a main body of the biofuel cell (1). Thus the portability of the biofuel cell (1) is enhanced. The same feature also enables minimization of costs related to materials used in building of a main body of the biofuel cell (i.e. main housing for receiving the anode (2) and electrolyte.

The cathode (3) can include a catalyst for conversion on cathode (3). The catalyst can include e.g. a platinum-based catalyst; preferably provided at a coating density within the range between 0.1 mg/cm$^2$ and 1 mg/cm$^2$ for rapid conversion and low cost in making the cathode (3); more preferably at a coating density within the range between 0.25 mg/cm$^2$ and 0.75 mg/cm$^2$ for optimal conversion rates along with an acceptable cathode cost.

The biofuel cell (1) according to the present invention can be provided with a medium including dissolved glucose. Glucose can serve as a carbon source for growth and survival of the neural stem cell lines. Said medium can include a serum (such as fetal bovine serum, fetal calf serum or horse serum; if horse serum is used, the serum can be included at a weight percentage in the medium up to approximately 2.5%), antibiotics, L-glutamine, glucose and one or more pH buffers. Such medium can be considered as an aseptic medium. The antibiotics serve for avoidance from contamination of the cell lines used in the biofuel cells by any (unwanted) microorganism. The antibiotics can include e.g. penicillin and/or streptomycin. Weight ratios of L-glutamine and antibiotics to a serum in said medium can preferably be both within a range between 1:11 and 1:9, e.g. approximately 1:10, in case where the serum includes fetal bovine serum and/or fetal calf serum. Weight ratios of L-glutamine and antibiotics to a serum in said medium can preferably be both within a range between 4:11 and 4:9, e.g. approximately 4:10, in case where the serum includes horse serum.

The glucose concentration in the medium can preferably be within the range between 1 g/L and 2.225 g/L.,

more preferably within the range between 1 g/L and 1.5 g/L, even more preferably around 1.125 g/L. It is observed that a higher power generation rate and yield is available at glucose concentrations within said ranges, with values closer to 1.125 g/L. The glucose concentration can also have values even below 1 g/L, yet the preferred ranges above are determined on the basis of lifespan enhancement of the cell lines over time, and thus provides an enhanced sustainability to the biofuel cell.

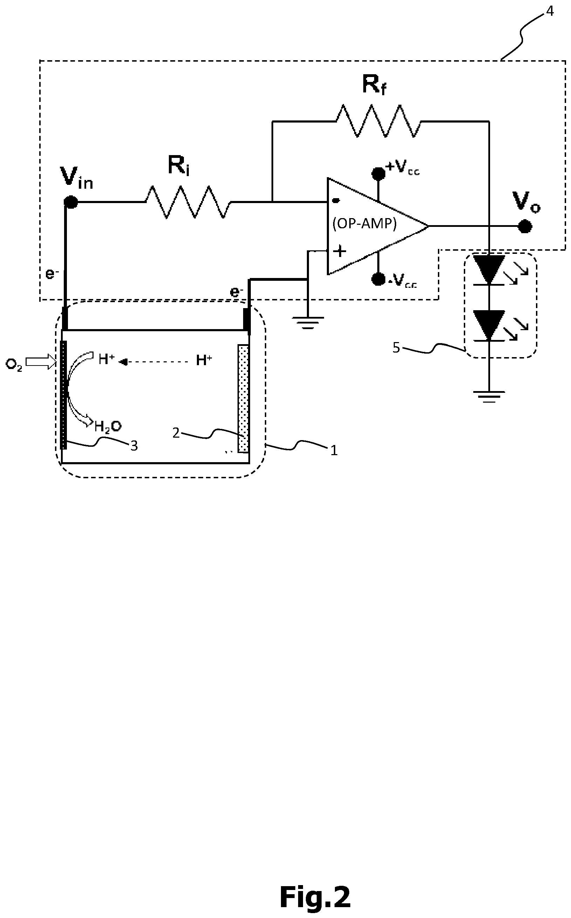

The biofuel cell (1) according to the present invention can be connected to an amplifier (4) for amplifying a voltage generated by said biofuel cell (1). This feature facilitates the adaptation of a biofuel cell (1) according to the present invention to serve in generating higher amounts of voltage sufficient to run an electronic device (5) with a high power demand. Such embodiment is schematically depicted in the Fig.2, wherein LED(s) are selected as electronic devices (5) to be powered by the biofuel cell (1) according to the present invention.

An exemplary lab-scale biofuel cell is formed and several experiments are conducted, as described below in detail. By giving the below Examples, it is solely intended to provide a better understanding of the present invention and is as such not intended to limit the scope of the appended claims.

In the experimental Examples described below, SH-SY5Y cell line is selected as a prominent member of neural stem cell lines for use in the biofuel cell (1) according to the present invention, especially because of its following qualities:

- the surface adhesion ability of SH-SY5Y is high, even when grown on a carbon cloth. Said high adhesion ability allows an enhanced flexibility in fuel cell designs;

- SH-SY5Y is non-toxic; SH-SY5Y has a low growth ratio and accordingly it is able to survive for a long time until their metabolites reach to toxic levels;

- Said low growth ratio allows an enhanced controllability of biofuel cell capacities employing SH-SY5Y;

- SH-SY5Y cell line show a favorable sustainability with respect to the magnitude of their population: they do not impair their habitat, and their specific electrical energy production capacity is higher than any other stem cell.

SH-SY5Y cell line is a type of neuroblastoma cell lines which are hereby considered as neural stem cell lines, and can be differentiated to obtain neurons. This renders SH-SY5Y useful in several aspects of neural stem cell research. In the examples below, non-differentiated neural stem cell lines (e.g. SH-SY5Y) are used because of their growing behavior allowing easy regeneration and enhanced sustainability of the biofuel cell, and their high adhesion tendency which allows an enhanced mechanical stability of an electrode on which the neural stem cell lines are placed. Differentiated neural stem cell lines are less preferred, since the differentiation increases the energy stress of the neural stem cell lines, which results in an increased sensitivity against mitochondrial defects and therefore affects energy metabolism of the neural stem cell lines.

Yet, although their adhesion is expected to be weaker when compared to SH-SY5Y cell line, different cell lines from the neural stem cell lines could be also used in a biofuel cell according to the present invention; in particular in the case where said different cell lines have energy metabolisms similar to that of SH-SY5Y in the terms of electrical energy production.

<u>EXAMPLE 1</u>: Preparation of a setup with an experimental exemplary biofuel cell according to the present invention.

An exemplary biofuel cell structure according to the present invention designed to utilize neural stem cell lines in power generation. The neural stem cell lines (here: SH-SY5Y) for being placed to an anode of the biofuel cell, are cultured on a base on which the neural stem cell lines can be immobilized.

In order to obtain an increased adhesion of the neural stem cell lines, a high surface per weight ratio subject can be preferable.

For the same reason, carbon cloth is considered eligible for being selected as base. Thus, for observing the performance of a biofuel cell according to the present invention, the neural stem cell lines are cultured on carbon cloth as base, on which they are adhered and allowed to grow. Carbon cloth is considered as an exemplary base material with a high surface per weight ratio.

Schematic view of an exemplary biofuel cell used to show that the biofuel cell according to the present invention works, is shown in Fig.1.

The biofuel cell (1) designed for the present experimental setup has a substantially prismatic geometry, and has an internal cavity with an internal volume of about 12 $cm^3$ and has a distance between its electrodes (namely anode (2) and cathode (3)) of about 1.7 cm, which corresponds to a distance of about 1.5 cm (here, circa 0.142 cm) per $cm^3$ of the internal volume of the biofuel cell (1); which remains within a preferred range between 1 cm and 2 cm, more preferably between 1.2 cm and 1.8 cm per $cm^3$ of internal volume of the biofuel cell (1). Other sizes and geometries of the biofuel cell can also be used, in accordance with case-depending design requirements such as power capacity.

Considering that an electrolytic communication is to be provided between the anode (2) and the cathode (3), the inner cavity of the biofuel cell (1) can be provided with an electrolyte. Cations (e.g. hydronium or protons) are expected to emerge on a surface of the anode (2). Said electrolyte can be an aqueous mixture, such as an aqueous "cell growth" medium.

The base on which the neural stem cell lines are cultured is to be included into the anode (2); thus, the anode (2) is provided with neural stem cell lines (i.e., SH-SY5Y as a neural stem cell line for the experimental exemplary setup). The neural stem cell lines can be grown on said base to be included into the anode (2), e.g. by subjecting said neural stem cell lines to a carbon dioxide incubator for a growth duration. In the present experiment, said subjecting to the incubator is performed for a growth duration of about one week prior to assembling the biofuel cell (1).

The anode (2) can be substantially water permeable; to this end, the anode (2) can be provided with a water permeable base, or such base can be used as anode (2) itself. As a water permeable base, a carbon cloth can be selected for its favorable property of high electrical conductivity. In the experimental biofuel cell (1), a non-wet-proofed carbon cloth (commercially obtained as Lot: CTO32414, FuelCells, Texas, USA) is selected as the base to be employed in the anode (2). Other exemplary materials providing a high electrical conductivity and therefore considered suitable to be included in a base material, include gold and graphene.

For achieving an increased cell population in a minimized volume and thereby achieving an increased electrical power production ratio without substantially increasing the size of the biofuel cell, a plurality of substantially planar bases (e.g. carbon clothes on which neural stem cell lines are grown and immobilized/adhered) are arranged to constitute a multilayered structure.

An exemplary way to do so is superimposing a multiple number of such bases upon one another. In other words, a plurality (here: four) of such bases are preferred to be used in series by placing the bases on top of one another and thereby arranging a multi-ply (four-ply) structure therefrom. An alternative way to achieve a comparable result can be considered, which includes folding a single base to obtain the multilayered structure.

In the experimental setup in which internal volume and distance between the electrodes of the exemplary biofuel cell (1) are mentioned above, the cathode (3) includes a single (single-layer) base (carbon cloth) with a vertical projection of electrolyte-side surface area of approximately 7 $cm^2$; and the multi-layer base of the anode (2) also has a vertical projection of electrolyte-side surface area of approximately 7 $cm^2$, which corresponds to approximately 28 $cm^2$ of carbon cloth considering that the base at the anode has four layers. These values are solely given for expressly describing the exemplary setup without limiting the scope of the invention.

Considering that the cathode (3) is where the hydronium ions or protons emerged on the surface of the anode (2) are to be utilized, the cathode (3) can be designed to be provided with oxygen (by an oxygen source, e.g. pure oxygen, air oxygen, oxygen containing gas, etc.), which is to be converted into water when brought into contact with the hydronium ions or protons. Considering that air is a low-cost or cost-free oxygen containing gas, the cathode (3) can partially or completely be substantially gas permeable, e.g. by including a gas permeable base. The oxygen source can be circulated within the cathode, but it can also be passed through the cathode (3) towards the inner cavity of the biofuel cell (1) where the electrolyte is placed.

The biofuel cell (1) can include a cathode (3) arranged to at least partly include an ambient air contact side for making use of ambient air in cathode reactions. For instance, the cathode (3) can be adapted to constitute a side wall of said biofuel cell (1). With such embodiments, ambient air can be used as an oxygen source without causing costs related to mass transfer equipment for bringing oxygen in contact with the reaction surfaces of the cathode (3). To this end, such cathode (3) can preferably be selected such that it blocks the electrolyte from leaving the biofuel cell (1). Accordingly, in an embodiment, the cathode (3) can be substantially liquid impermeable; e.g. the cathode (3) can include a base which is substantially liquid impermeable. As a water impermeable base to be used in the cathode (3), a carbon cloth can be selected for its favorable property of high electrical conductivity. The base used in the cathode (3) of the experimental biofuel cell for utilizing ambient air in cathode reactions, is formed from a wet-proofed carbon cloth (commercially obtained as Lot: 14032102, FuelCells, Texas, USA).

An oxygen source contact receiving surface of the cathode (3) can be provided (e.g. coated) with a water repelling agent such as poly(thetrafluoroethylene) (PTFE), and preferably further provided with a powder which includes carbon (a carbon powder, more preferably nano-sized carbon powder), for enhancing said water impermeability.

The cathode (3) can be further provided with a catalyst for conversion of cations in the electrolyte. Said catalyst is preferably in the form of a powder, more preferably in the form of a nano-sized powder. In the experimental setup, the cathode (3) (e.g. an electrolyte contact surface of the cathode) is provided with platinum-based catalyst(e.g. a commercially available one with a definition of "HP (i.e. high-power) 20% Platinum on Vulcan XC-72, product #591278" (by FuelCellStore, Texas, USA), obtained as of 10 March 2014, which is used in the examples). The preferred coating densities above are considered valid for the exemplary experimental biofuel cell (1).) as catalyst, which can be immobilized onto the cathode (3) e.g. using a binding agent (here: nafion) and said binding agent can be in the form of a membrane.

The platinum-based catalyst is preferred to be provided onto the cathode (3) in a coating density of 0.5 $mg/cm^2$, which remains within a preferable range between 0.1 $mg/cm^2$ (providing investment cost minimization with minimum compromise in conversion ratio of cations on the cathode) and 1 mg/cm$^2$ (providing rapid conversion of the cations on the cathode without unduly increasing the investment costs); the surface areas here being taken from a substantially planar projection of the cathode (3). As a sweet spot for optimal configuration between the rate of conversion and the costs, the coating density can more preferably be within the range between 0.25 mg/cm$^2$ and 0.75 mg/cm$^2$.

The voltage generated by the biofuel cell (1) according to the present invention can be directly used for suitable electronic devices (5). In the cases of energizing electronic devices with high power demands, to which, directly achievable voltages by the biofuel cell would be insufficient, the voltage can be adapted to levels useful therefor,.

Such adaptation can be achieved a by scaling the biofuel cell up, and/or by coupling the biofuel cell (1) with an amplifier (4), such as a transistor or an OP-AMP (operational amplifier) as schematized in the Fig.2.

In the Fig.2, electronic device(s) (5) to be energized by the power generated by the biofuel cell (1) is exemplified over a couple of light emitting diodes (LEDs) arranged in series. The anode is connected to the ground (which represents a reference voltage level of zero), along with a positive (+) end of the OP-AMP. Here; $V_{in}$, $R_i$, $R_f$, +$V_{cc}$, -$V_{cc}$, LED 1, and LED 2 respectively represent a voltage inlet to the amplifier (said voltage inlet being electrically connected to the cathode), an input resistor, a feedback resistor, a positive power supply voltage, a negative power supply voltage, a first electronic device (5) energized by the biofuel cell, and a further (second) electronic device (5) energized by the biofuel cell.

Fig.2 shows an exemplary setup for observing the activity of the biofuel cell according to the present invention, by voltage amplification for energizing electronic device(s) (5).

In the experiments, a circuit provided with a 741-type OP-AMP is used as amplifier (4) for adapting the voltage obtained from the biofuel cell (1) according to the present invention. The selection of amplifier (4) here is merely made in accordance with the energy requirements of LEDs which represent electronic device(s) (5) to be powered by the biofuel cell (1) according to the present invention. A positive feed voltage value (+$V_{cc}$) of 5V, and a negative feed voltage value (-$V_{cc}$) of 0V can be selected. A correlation between the input voltage ($V_{in}$) and output voltage ($V_o$) can be given as in the following Equation 1, wherein a feedback resistance value ($R_f$) of 2k$\Omega$ and an inlet resistance value ($R_i$) of 100k$\Omega$ can be selected:

$$V_O = -\frac{R_f}{R_i} V_{in} \qquad \text{[Equation 1]}$$

The $V_{in}$ connected to the cathode (3), is conducted through the $R_i$ and $R_f$, and results in a current towards the $V_o$. The inlet voltage ($V_{in}$) is multiplied by the amplifier (4) (here: an OP-AMP circuit) with a ratio of $R_f/R_i$, and thereby the value of outlet voltage ($V_o$) is obtained. The electronic devices (5) (here: LEDs) are placed between the outlet voltage and ground, such that said electrical devices electrically connect the outlet (where the outlet voltage is available) to the ground. It is observed that, upon amplification by the amplifier (4), the electrical power provided by the biofuel cell (1) suffices to activate electronic devices (5) (the LEDs can be turned and kept on).

EXAMPLE 2: Activating the experimental exemplary biofuel cell according to the present invention.

The anode (2) (or the base of the anode (2) provided with neural stem cell lines) is subjected to a medium under aceptical conditions for cell growth. An exemplary medium suitable for use in the preparation of the experimental setup can include a serum (e.g. fetal bovine serum (FBS), fetal calf serum (FCS) or horse serum (HS); fetal bovine serum is selected for the experiments), antibiotics, L-glutamine, glucose and one or more pH buffers: The medium is prepared from high glucose DMEM (Dulbecco's Modified Eagle Medium) (commercially obtained from Multicell, Cat. No. 319-005-CL, Canada); the medium further including 10 wt.% of fetal bovine serum (FBS), 1 wt.% of antibiotics (e.g. penicillin and/or streptomycin), and 1 wt.% of L-glutamine solution with respect to the total weight of the medium. The medium is kept at neutral pH using a buffer solution (e.g. PBS at pH=7). Thus, also in diluted versions of the medium, weight ratios of L-glutamine and antibiotics to fetal bovine serum are selected to be 1:10 (within a range between 1:11 and 1:9).

For starting up the experimental exemplary biofuel cell (1) according to the present invention, the above described medium is used as the electrolyte which allows sustainable cell growth to increase the available voltage from the biofuel cell (1).

The anode (2) and the cathode (3) were further electrically connected to one another over an outer resistance (here in the experiments, a resistance of 1 kOhm is used). Time-based record of voltage generated by the biofuel cell (1) which comprises the assembly of the anode (2), cathode (3), electrolyte (here: the medium) is kept, using a computing device. It is witnessed that a reproducible and stable voltage generation is achieved by the biofuel cell (1) according to the present invention at the end of a first period of growing the neural stem cell lines on the anode (2). Then, by keeping the pH of the medium substantially neutral, the medium is gradually diluted (e.g. by using the PBS mentioned above) to bring the glucose concentration to a value within the range between 1 g/L and 2.225 g/L (grams per liter). 1 g/L is considered as a lower limit for maintaining the cell population, and increased voltage values were recorded at glucose concentrations of 2.225 g/L or lower when compared to higher glucose concentrations at earlier stages of diluting the medium.

It is observed that at glucose concentration value of 1.125 g/L which falls within a preferred range between 1 g/L and 1.5 g/L, even higher values of voltage are available.

EXAMPLE 3: Several observations on the experimental exemplary biofuel cell according to the present invention.

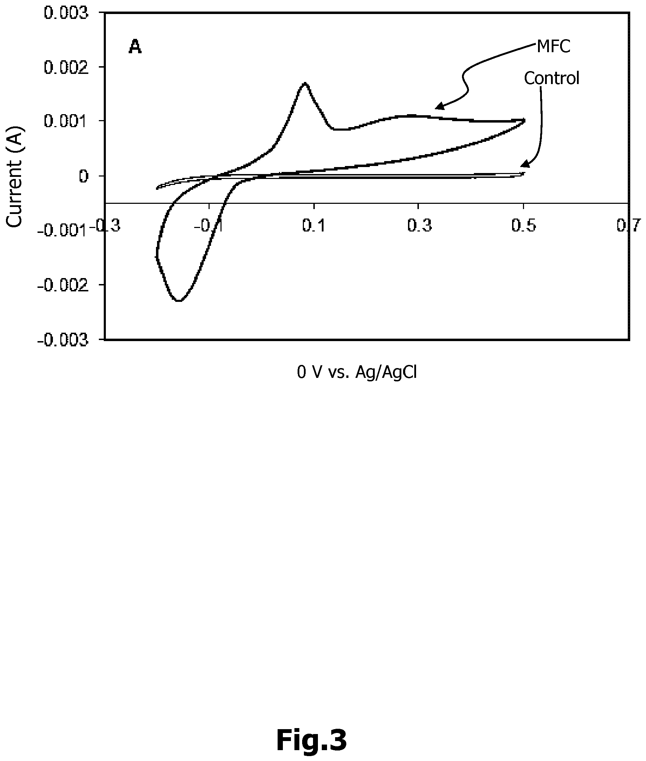

Fig.3 shows cyclic voltammetry analysis results of the base used as anode material in the experimental exemplary biofuel cell according to the present invention, said base being provided with neural stem cell lines (Here: SH-SY5Y cell line). The scan rate is 10 mV/s. The anode (2) has a substantially planar surface area projection of approximately 7 cm$^2$, and is provided with SH-SY5Y as neural stem cell lines. The anode (2) is used as a working electrode, Ag/AgCl is used as a reference electrode, and a platinum rod is used as a counter-electrode. The cyclic voltammetry analysis results are collected at various scan rates. Diluted DMEM solution with 1.125 g/L glucose concentration is used as medium in an electroanalytical cell, which is purged with an inert gas (nitrogen) for approximately 10 minutes prior to cyclic voltamettry analyses. "Control" corresponds to analysis results achieved by the reference electrode to be compared with the analysis results of the "working electrode".

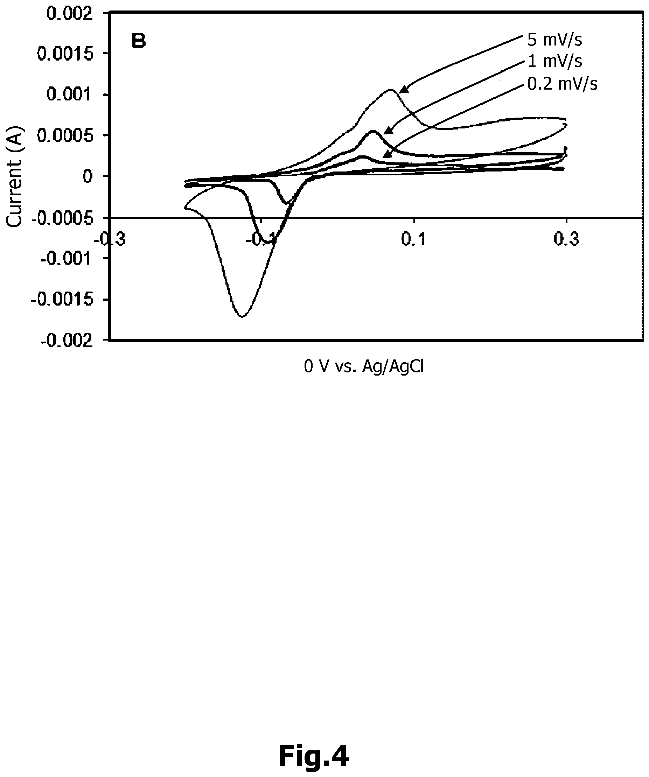

Fig.4 shows cyclic voltammetry analysis results of the biofuel cell including an anode provided with neural stem cell lines, at different scan rates of 0.2 mV/s, 1 mV/s and 5 mV/s.

The results shown in Fig.3 and Fig.4 propose that the biofuel cell (1) according to the present invention does generate a remarkable amount of electric power.

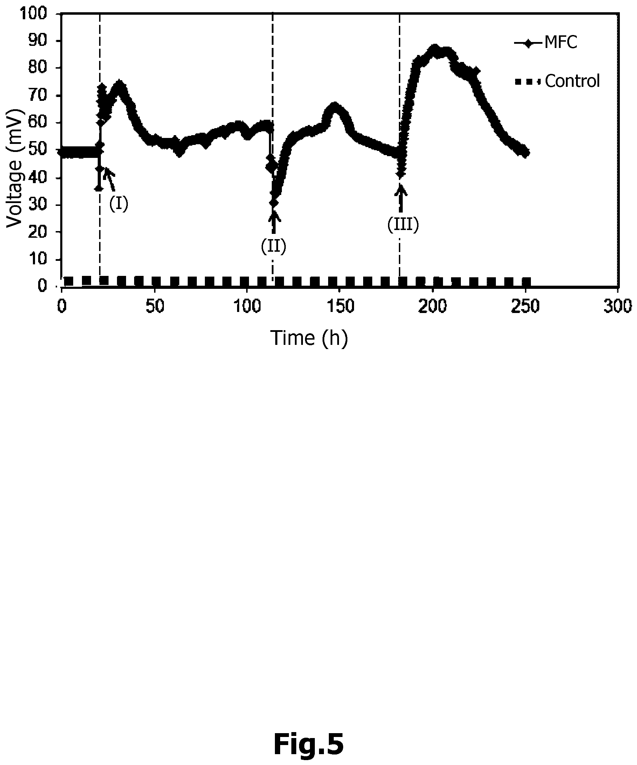

It is observed that discrete operation (non-continuous mode of operation) of the biofuel cell (1) according to the present invention does not require any repetition of inoculation of the neural stem cell lines, as rendered deducable from Fig.5. Even solely renewing the medium suffices for restoring the electric power generation.

The power generation profiles of the biofuel cell according to the present invention which are shown in Fig.5, are taken under an external resistance (of 980 Ohms). (I), (II) and (III) represent instances of the biofuel cell by introduction of medium which respectively correspond to 4.5 g/L glucose containing DMEM solution, recovery of voltage generated by the biofuel cell with the same solution, and regeneration of the biofuel cell with a diluted version of the same solution which includes 1.125 g/L of glucose as a result of said dilution. The voltage increase upon the instance (III) shows that the glucose concentration of 1.125 g/L which is within the preferred range between 1 g/L and 2.225 g/L and further within the more preferred range between 1 g/L and 1.5 g/L, results in a higher power output from the biofuel cell. In comparison with the power generation profile of a "control" fuel cell which has an anode lacking neural stem cell lines (control biofuel cell), the biofuel cell (1) shows a remarkably higher power generation performance at each instance.

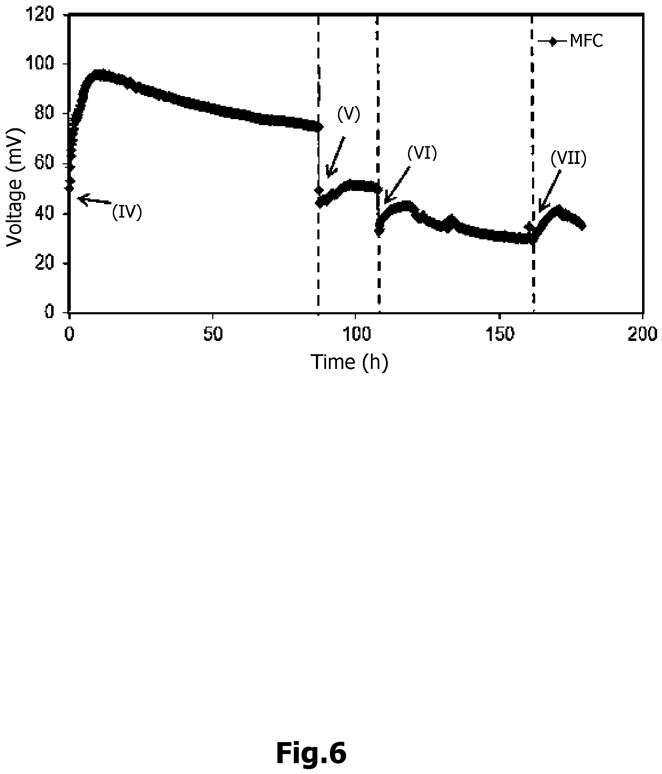

The power generation profiles of the biofuel cell according to the present invention which are shown in Fig.6, are taken under an external resistance (of 980 Ohms). (IV), (V), (VI) and (VII) represent instances of the biofuel cell by introduction of medium which respectively correspond to a medium comprising 1.125 g/L glucose containing diluted DMEM solution, a regeneration of the biofuel cell by changing the present medium with a new medium comprising 2.25 g/L glucose containing diluted DMEM solution, a further regeneration of the biofuel cell by changing the present medium with a new medium comprising 4.5 g/L glucose containing DMEM solution, and an even further regeneration of the biofuel cell by introducing a serum (here: fetal bovine serum (FBS)). It is observed that increasing the concentration of DMEM (which also corresponds to increasing the glucose concentration) decreases the power generation rates.

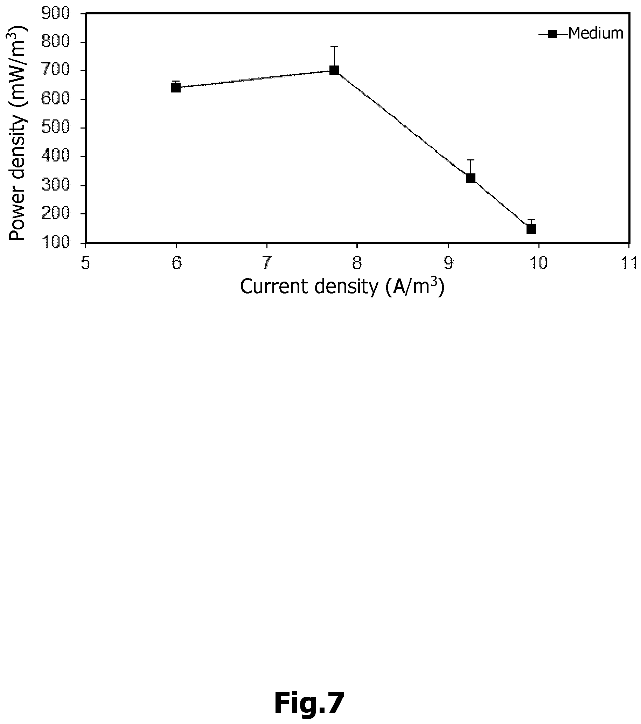

Fig.7 shows several power density values achievable using the biofuel cell according to the present invention including a medium comprising DMEM. Said power density values are achieved under various resistance values ranging between 117 Ohms and 1500 Ohms. A higher power density of $702\pm81$ mW m$^{-3}$ is obtained at a current density of $7.7\pm0.44$ A m$^{-3}$. It can be concluded that, when a DMEM-based medium is employed as electrolyte, the experimental exemplary biofuel cell (1) according to the present invention provides higher power density values at low current density values, (here: current densities lower than approximately 8 A/m$^3$).

Thus the Examples prove that the following objects are achieved by the present invention:

- overcoming the aforementioned shortcomings of the prior art, and

- provision of a biofuel cell for sustainable energy generation and a method for preparation of the same.

| Reference numerals | Related features |
|---|---|
| 1 | biofuel cell |

(continued)

| Reference numerals | Related features |
| --- | --- |
| 2 | anode |
| 3 | cathode |
| 4 | amplifier |
| 5 | electronic device(s) |

**Claims**

1. A biofuel cell (1) comprising an anode (2) provided with neural stem cell lines.

2. The biofuel cell according to the claim 1, wherein the neural stem cell lines include neuroblastoma cell lines.

3. The biofuel cell according to any one of the claims 1 or 2, wherein the neural stem cell lines include SH-SY5Y cell line.

4. The biofuel cell according to any one of the claims 1 to 3, wherein said neural stem cell lines are provided on one or more carbon clothes at least partly forming the anode (2).

5. The biofuel cell according to any one of the claims 1 to 4, comprising a cathode (3) which is at least partly formed from a gas-permeable and electrically conductive material; said material preferably includes a textile which comprises one or more ingredient selected from a list consisting of carbon fibers, graphene, and gold; more preferably said material carbon cloth.

6. The biofuel cell according to the claim 5, wherein the cathode (3) includes an ambient air contact side for making use of ambient air in cathode reactions.

7. The biofuel cell according to the claim 6, wherein the cathode (3) is substantially liquid impermeable and adapted to constitute a side wall of said biofuel cell (1), and the cathode (3) includes an oxygen source contact receiving surface provided with a water repelling agent.

8. The biofuel cell according to any one of the claims 5 to 7, wherein the cathode (3) includes platinum based catalyst for conversion on cathode (3); the platinum-based catalyston the cathode (3) being provided at a coating density within the range between $0.1$ mg/cm$^2$ and $1$ mg/cm$^2$, preferably at a coating density within the range between $0.25$ mg/cm$^2$ and $0.75$ mg/cm$^2$.

9. The biofuel cell according to any one of the claims 1 to 8, provided with a medium including dissolved glucose.

10. The biofuel cell according to the claim 9, wherein said medium includes a serum selected from fetal bovine serum, fetal calf serum and horse serum; and wherein said medium further includes antibiotics, L-glutamine, glucose and one or more pH buffers.

11. The biofuel cell according to the claim 10, wherein said antibiotics include penicillin and/or streptomycin.

12. The biofuel cell according to any one of the claims 10 or 11, wherein weight ratios of L-glutamine and antibiotics to the serum in said medium are both within a range between 1:11 and 1:9, in a case where the serum includes fetal bovine serum and/or fetal calf serum; and wherein weight ratios of L-glutamine and antibiotics to the serum in said medium are both within a range between 4:11 and 4:9, in a case where the serum includes horse serum.

13. The biofuel cell according to any one of the claims 10 to 12, wherein the glucose concentration in the medium is within the range between 1 g/L and 2.225 g/L.

14. The biofuel cell according to the claim 13, wherein said glucose concentration is 1.125 g/L.

15. The biofuel cell according to any one of the claims 1 to 14, connected to an amplifier (4) for amplifying a voltage generated by said biofuel cell (1).

**Patentansprüche**

1. Biobrennstoffzelle (1) mit einer Anode (2), die mit neuralen Stammzelllinien versehen ist.

2. Biobrennstoffzelle nach Anspruch 1, bei der die neuralen Stammzelllinien Neuroblastom-Zelllinien umfassen.

3. Biobrennstoffzelle nach einem der Ansprüche 1 oder 2, bei der die neuralen Stammzelllinien die SH-SY5Y-Zelllinie umfassen.

4. Biobrennstoffzelle nach einem der Ansprüche 1 bis 3, bei der die neuralen Stammzelllinien auf einem oder mehreren Kohlenstofftuch bzw. -tüchern vorgesehen sind, das bzw. die zumindest teilweise die Anode (2) bildet bzw. bilden.

5. Biobrennstoffzelle nach einem der Ansprüche 1 bis 4, umfassend eine Kathode (3), die zumindest teilweise aus einem gasdurchlässigen und elektrisch leitfähigen Material gebildet ist; wobei das Material vorzugsweise ein Textil mit einem oder mehreren Bestandteilen umfasst, welcher bzw. welche aus einer Liste ausgewählt ist bzw. sind, die aus Kohlenstofffasern, Graphen und Gold besteht; wobei es sich bei dem Material besonders bevorzugt um Kohletuch handelt.

6. Biobrennstoffzelle nach Anspruch 5, bei der die Kathode (3) eine Umgebungsluft-Kontaktseite zur Nutzung der Umgebungsluft bei Kathodenreaktionen aufweist.

7. Biobrennstoffzelle nach Anspruch 6, bei der die Kathode (3) im Wesentlichen flüssigkeitsundurchlässig ist und angepasst ist, eine Seitenwand der Biobrennstoffzelle (1) zu bilden, und die Kathode (3) eine Sauerstoffquellenkontaktaufnahmefläche umfasst, die mit einem wasserabweisenden Mittel versehen ist.

8. Biobrennstoffzelle nach einem der Ansprüche 5 bis 7, bei der die Kathode (3) einen Katalysator auf Platinbasis zur Umwandlung auf der Kathode (3) enthält; wobei der Katalysator auf Platinbasis auf der Kathode (3) mit einer Beschichtungsdichte im Bereich zwischen 0,1 mg/cm$^2$ und 1 mg/cm$^2$, vorzugsweise mit einer Beschichtungsdichte im Bereich zwischen 0,25 mg/cm$^2$ und 0,75 mg/cm$^2$, vorgesehen ist.

9. Biobrennstoffzelle nach einem der Ansprüche 1 bis 8, versehen mit einem Medium, das gelöste Glukose enthält.

10. Biobrennstoffzelle nach Anspruch 9, bei der das Medium ein Serum enthält, das aus fötalem Rinderserum, fötalem Kälberserum und Pferdeserum ausgewählt ist, und bei der das Medium des Weiteren Antibiotika, L-Glutamin, Glucose sowie einen oder mehrere pH-Puffer enthält.

11. Biobrennstoffzelle nach Anspruch 10, bei der die Antibiotika Penicillin und/oder Streptomycin umfassen.

12. Biobrennstoffzelle nach einem der Ansprüche 10 oder 11, bei der die Gewichtsverhältnisse von L-Glutamin und Antibiotika zum Serum im Medium beide im Bereich zwischen 1:11 und 1:9 liegen, wenn das Serum fötales Rinderserum und/oder fötales Kälberserum enthält; und wobei die Gewichtsverhältnisse von L-Glutamin und Antibiotika zum Serum im Medium beide im Bereich zwischen 4:11 und 4:9 liegen, wenn das Serum Pferdeserum enthält.

13. Biobrennstoffzelle nach einem der Ansprüche 10 bis 12, bei der die Glucosekonzentration im Medium im Bereich zwischen 1 g/L und 2,225 g/L liegt.

14. Biobrennstoffzelle nach Anspruch 13, bei der die Glucosekonzentration bei 1,125 g/L liegt.

15. Biobrennstoffzelle nach einem der Ansprüche 1 bis 14, angeschlossen an einen Verstärker (4) zur Verstärkung einer von der Biobrennstoffzelle (1) erzeugten Spannung.

**Revendications**

1. - Pile à biocombustible (1) comprenant une anode (2) pourvue de lignées de cellules souches neurales.

2. - Pile à biocombustible selon la revendication 1, dans laquelle les lignées de cellules souches neurales comprennent des lignées de cellules de neuroblastome.

**3.** - Pile à biocombustible selon l'une quelconque des revendications 1 ou 2, dans laquelle les lignées de cellules souches neurales comprennent la lignée de cellules SH-SY5Y.

**4.** - Pile à biocombustible selon l'une quelconque des revendications 1 à 3, dans laquelle lesdites lignées de cellules souches neurales sont disposées sur un ou plusieurs tissus de carbone formant au moins partiellement l'anode (2).

**5.** - Pile à biocombustible selon l'une quelconque des revendications 1 à 4, comprenant une cathode (3) qui est au moins partiellement formée à partir d'un matériau perméable aux gaz et conducteur de l'électricité ; ledit matériau comprend, de préférence, un textile qui comprend un ou plusieurs ingrédients choisis parmi une liste consistant en fibres de carbone, graphène et or ; de manière davantage préférée, ledit matériau est un tissu de carbone.

**6.** - Pile à biocombustible selon la revendication 5, dans laquelle la cathode (3) comprend un côté de contact avec l'air ambiant pour faire usage de l'air ambiant dans des réactions cathodiques.

**7.** - Pile à biocombustible selon la revendication 6, dans laquelle la cathode (3) est sensiblement imperméable aux liquides et est apte à constituer une paroi latérale de ladite pile à biocombustible (1), et la cathode (3) comprend une surface de réception de contact de source d'oxygène pourvue d'un agent hydrofuge.

**8.** - Pile à biocombustible selon l'une quelconque des revendications 5 à 7, dans laquelle la cathode (3) comprend un catalyseur à base de platine pour une conversion sur la cathode (3) ; le catalyseur à base de platine sur la cathode (3) étant fourni à une densité de revêtement dans la plage entre 0,1 mg/cm$^2$ et 1 mg/cm$^2$, de préférence à une densité de revêtement dans la plage entre 0,25 mg/cm$^2$ et 0,75 mg/cm$^2$.

**9.** - Pile à biocombustible selon l'une quelconque des revendications 1 à 8, pourvue d'un milieu comprenant du glucose dissous.

**10.** - Pile à biocombustible selon la revendication 9, dans laquelle ledit milieu comprend un sérum choisi parmi le sérum bovin fœtal, le sérum de veau fœtal et le sérum de cheval ; et dans laquelle ledit milieu comprend en outre des antibiotiques, de la L-glutamine, du glucose et un ou plusieurs tampons de pH.

**11.** - Pile à biocombustible selon la revendication 10, dans laquelle lesdits antibiotiques comprennent de la pénicilline et/ou de la streptomycine.

**12.** - Pile à biocombustible selon l'une quelconque des revendications 10 ou 11, dans laquelle des rapports pondéraux de la L-glutamine et des antibiotiques au sérum dans ledit milieu se trouvent tous deux dans une plage entre 1:11 et 1:9, dans un cas où le sérum comprend le sérum bovin fœtal et/ou le sérum de veau fœtal ; et dans laquelle des rapports pondéraux de la L-glutamine et des antibiotiques au sérum dans ledit milieu se trouvent tous deux dans une plage entre 4:11 et 4:9, dans un cas où le sérum comprend du sérum de cheval.

**13.** - Pile à biocombustible selon l'une quelconque des revendications 10 à 12, dans laquelle la concentration en glucose dans le milieu se trouve dans la plage entre 1 g/L et 2,225 g/L.

**14.** - Pile à biocombustible selon la revendication 13, dans laquelle ladite concentration en glucose est de 1,125 g/L.

**15.** - Pile à biocombustible selon l'une quelconque des revendications 1 à 14, connectée à un amplificateur (4) pour amplifier une tension générée par ladite pile à biocombustible (1).

**Fig.1**

Fig.2

0 V vs. Ag/AgCl

# Fig.3

**Fig.4**

**Fig.5**

**Fig.6**

**Fig.7**

**EP 3 891 828 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20130026969 A1